# EUROPÄISCHE PATENTSCHRIFT

(11) **EP 1 378 284 B1**
(45) Veröffentlichungstag und Bekanntmachung des Hinweises auf die Patenterteilung: **11.04.2007**
(21) Anmeldenummer: 03000521.9
(22) Anmeldetag: 09.01.2003
(51) Int. Cl.: B01D 46/24

(54) **Wechselfilter**
Spin-on canister filter
Filtre à cartouche à visser

(30) Priorität: 05.05.2002 DE 10204505
(43) Veröffentlichungstag der Anmeldung: 07.01.2004
(73) Patentinhaber: Mann + Hummel GmbH, 71638 Ludwigsburg (DE)
(72) Erfinder: Binder, Walter, 71522 Backnang (DE); Harenbrock, Michael, Dr., 71640 Ludwigsburg (DE)
(74) Vertreter: Voth, Gerhard

(56) Entgegenhaltungen:
- EP-A- 0 726 389
- EP-A- 0 945 160
- EP-A- 1 208 902
- DE-U- 29 904 204
- US-A- 4 113 627
- US-B1- 6 299 772

## Beschreibung

### Gebiet der Erfindung

Die vorliegende Erfindung betrifft einen Wechselfilter nach dem Oberbegriff des Anspruches 1.

### Hintergrund der Erfindung, Stand der Technik

Die Filtration stellt eines der wichtigsten Trennverfahren für Stoff-Gemische dar. Mit ihrer Hilfe können bspw. Feststoffteilchen aus Flüssigkeiten (Suspensionen) oder aus Gasen (Staub), und auch nichtlösliche Flüssigkeitströpfchen aus einer anderen Flüssigkeit (Emulsion), sowie aus Gasen (Aerosole) abgetrennt werden. Je nach Art des Stoff-Gemisches werden unterschiedliche Filter bzw. Filterelemente zur Trennung verwendet.

So ist bspw. bekannt, dass Filterelemente für zu filternde Medien, wie Flüssigkeiten oder Luft, so konstruiert sein können, dass die ausgefilterten Partikel durch mechanische Vorrichtungen, wie Schaber oder Bürsten, entfernt werden. Es ist auch bekannt, mit sogenannten Rückspül- oder Querstromfiltern mittels einer Strömungsumkehr oder einer Querströmung der zu filternden Flüssigkeit eine Reinigung der Filteroberfläche bzw. der Filtermembran vorzunehmen.

Ein Beispiel für solche Filterelemente sind Rundfilterpatronen. So ist bspw. aus der WO 95/19832 ein Filtereinsatz bekannt, der in einem Gehäuse angeordnet ist, welches einen Rohluftzutritt sowie einen Reinluftaustritt aufweist. Ein solches Filter dient der Reinigung von Ansaugluft einer Brennkraftmaschine. Der Filtereinsatz wird zwischen zwei konzentrischen Flächen des Filtergehäuses eingespannt, die Einspannung ist gleichzeitig die Abdichtung, wobei auch bei Erschütterungen oder Schwingungen eine zuverlässige Abdichtung gewährleistet sein muß.

Eine wichtige Aufgabe kommt bei solchen und anderen Filterelementen der Abdichtung zwischen Roh- und Reinseite sowie der Abdichtung des Filters nach aussen zu. Zu diesem Zweck werden Dichtungen in das Filterelement integriert, welche mit Funktionsflächen am Gehäuse korrespondieren und daher eine hohe Maßgenauigkeit aufweisen müssen.

Insbesondere der Abdichtung nach aussen kommt eine hohe Bedeutung zu, da bei Undichtheit z.B. Flüssigkeiten wie Öl oder Kraftstoff aus dem System entweichen und so ein Sicherheitsrisiko darstellen. Hieraus folgt, dass die Aussendichtung maßgenau in die Dichtungsaufnahme des Gehäuses eingebracht werden und mit der Gegenfläche optimal korrespondieren muss.

Solche Dichtungen werden bisher überwiegend als fertig vulkanisierte Formteile eingekauft und bestehen aus Festelastomeren, bspw. Nitrilkautschuk (NBR), Acrylkautschuk (AEM, ACM) oder Fluorkautschuk (FKM), die dann in eine dafür vorgesehene Nut am Filterelement platziert werden.

Dies hat den Nachteil, dass die lose eingesetzten Dichtungselemente oftmals keine 100%ige Abdichtung zulassen, und es auf diese Weise zu einer Vermischung der Medien auf der Roh- bzw. Reinseite oder zu Undichtheiten nach aussen mit den oben beschriebenen Auswirkungen auf die Sicherheit kommt.

Das Dokument US 6299772 offenbart eine Filtervorrichtung mit einem in einem Gehäuse angeordneten Filterelement. Das Filterelement verfügt über eine umlaufend angeordnete Dichtung. Diese Dichtung bewirkt eine Trennung zwischen einer Roh- und einer Reinseite der Filtervorrichtung.
Das Dokument EP 0726389 offenbart einen Luftfilter mit einem Gehäuse und einem dichtend eingesetzten Filterelement. Das Gehäuse verfügt über eine umlaufende Rinne, in welche eine Silikonschaumdichtung eingebracht ist. Diese Silikonschaumdichtung überdeckt einen Teil des Randes des Filtermaterials. Somit wird eine dichte Verbindung zwischen den Gehäuseteilen und dem Filterelement erzeugt.

Das Dokument EP 1208902 offenbart ebenfalls einen Luftfilter mit einem Gehäuse und einem dichtend darin eingesetzten Filterelement. Hierbei verfügt das Filterelement über eine angegossene Dichtung, welche zwischen den Gehäuseteilen verpresst wird.

Das Dokument US 4113627 offenbart ein Verfahren zur Herstellung eines Filters, bei welchem eine Dichtung direkt an das Filtermedium angespritzt wird. Diese Dichtung wird zwischen zwei Gehäuseteile eingelegt, wobei die Gehäuseteile anschließend fest miteinander verbunden werden.

Das Dokument DE 29904204 offenbart ein Filterelement zur Filtrierung von flüssigen oder gasförmigen Medien. Das Filterelement verfügt über ein zickzackförmig gefaltetes Filtermedium, welches an den Stirnseiten einer Stirnscheibe versehen ist. Auf der Stirnscheibe ist ein Dichtelement angeordnet, welches im Zwei-Komponenten-Spritz-Gießverfahren mit der Stirnscheibe gebildet ist.

Das Dokument EP 0945160 offenbart die Verwendung einer Elastomerdichtung auf einer Endscheibe. Die Endscheibe ist an einer Stirnseite eines Ringfiltermediums angeordnet. Zur festen Verbindung des Dichtrings auf der Stirnscheibe besteht der Dichtring aus einem Kautschuk, welcher mit der Stirnscheibe eine chemische Verbindung bildet.

Das Dokument DE 19641369 offenbart einen Wechselfilter mit einem topfförmigen Gehäuse, in welchem ein Filtereinsatz enthalten ist. Der Filtereinsatz trennt eine Rohseite dichtend von einer Reinseite, wodurch Partikel aus dem flüssigen Medium abgeschieden werden. Das Gehäuse verfügt über einen Deckel und einen Topf, wobei der Deckel mittels einer Bördelverbindung mit dem Topf verbunden ist. Der Deckel verfügt über ein Gewinde, mit welchem der Wechselfilter an eine Verbrennungskraftmaschine anschraubbar ist.

### Zusammenfassung der Erfindung

Es ist daher die Aufgabe der vorliegenden Erfindung, einen Wechselfilter kostengünstig her zu stellen, welcher, eine exakte Abdichtung nach außen erreicht.

Diese Aufgabe wird durch die Merkmale des Anspruches 1 gelöst.

Weitere vorteilhafte Ausgestaltungen sind in den Unteransprüchen enthalten.

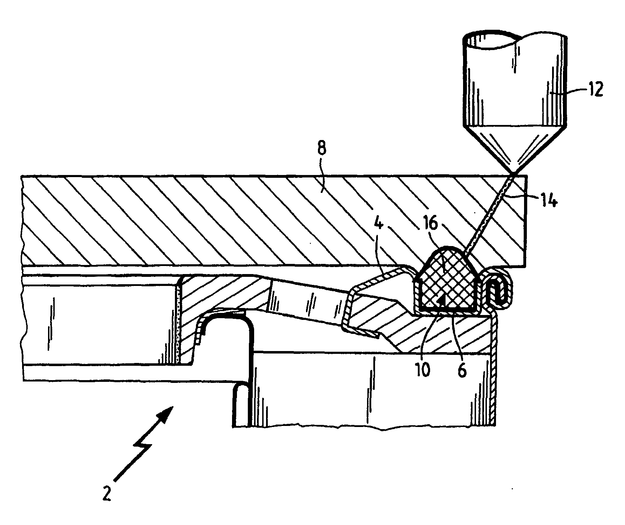

### Kurze Beschreibung der Zeichnung

Die Erfindung wird im Folgenden anhand der einzigen Zeichnung näher erläutert. Dabei zeigt die Figur schematisch das Applizieren der Dichtung an dem erfindungsgemässen Wechselfilter.

### Detaillierte Beschreibung der Ausführungsbeispiele

Die Figur zeigt ein Filterelement 2, das an seinem oberen Ende einen Dichtungshalter 4 trägt. Der Dichtungshalter 4 ist in Form einer Nut 6 ausgebildet. Ein Werkzeug- bzw. Formoberteil 8, das die Dichtungsgeometrie zum Anbringort (z.B. den Motor einer Brennkraftmaschine) wiedergibt, wird auf die Nut 6 aufgesetzt. Durch die Verwendung verschiedenartiger Werkzeuge (Oberteile) können spezielle Dichtungsquerschnitte realisiert werden. Das Aufsetzen geschieht dabei in der Weise, dass es in der Nut 6 zu einer Abdichtung kommt. Durch das passgenaue Aufsetzen des Oberteils 8 auf die Nut 6 entsteht ein Hohlraum 10, dessen Form den Querschnitt und die Kontur der zu erzeugenden Dichtung 16 festlegt. In diesen Hohlraum wird nun ein entsprechendes Dichtungsmaterial eingespritzt. Dies geschieht bevorzugt durch eine am Werkzeugoberteil 8 angebrachte Dosiereinrichtung 12, mit Hilfe derer das Dichtungsmaterial über eine Einspritzleitung 14 in die Nut 6 appliziert wird. Es ist für den Fachmann jedoch einsichtig, dass auch andere Arten der Applizierung gewählt werden können. Nach kurzem Aushärten wird das formgebende Oberteil 8 entnommen, die Dichtung 16 verbleibt in der Nut 6. Falls erforderlich, kann der applizierte Dichtungswerkstoff anschliessend z.B. durch Erhitzen weiter vulkanisiert werden.

Als Dichtungsmaterial wird bevorzugt ein vulkanisierendes Flüssigsilicon verwendet, bzw. Systeme, die bei Raumtemperatur aushärten. Dies können sogenannte RTV-2K- oder auch RTV-1K-Produkte sein, die z.B. über Polyadditions- oder -kondensationsreaktionen in einen vernetzten Zustand übergehen.

Silikon ist aufgrund seines sehr guten Temperaturprofils (sowohl gute Kälteflexibilität als auch gute Hochtemperaturbeständigkeit), sowie der gut beherrschbaren Vulkanisations- und Verarbeitungsbedingungen hierfür ein geeignetes Material und wird bevorzugt eingesetzt. Prinzipiell sind nach diesem Verfahren auch Dichtungen erzeugbar, die aus anderen Elastomeren bestehen, wie z.B. NBR, AEM, ACM, usw. Spezielle LSR-Silicon-Mischungen weisen zusätzlich eine ausreichend hohe Ölbeständigkeit auf, was für eine Verwendung als Ölfilter in Brennkraftmaschinen von Vorteil ist.

Das erfindungsgemässe Spritz-/Prägeverfahren zum Einbringen einer Dichtung kann überall dort zur Anwendung kommen, wo bisher lose Dichtungen in eine Nut appliziert werden.

Weitere Vorteile der Erfindung liegen in der hohen Flexibilität, dadurch bedingt, dass mit demselben Verfahren, je nach Werkzeuggestaltung, sehr unterschiedliche Dichtungen erzeugbar sind, der hohen Geschwindigkeit und somit den günstigen Kosten des Verfahrens.

## Patentansprüche

1. Wechselfilter mit einem topfförmigen Gehäuse und einem Deckel, wobei der Deckel durch eine Deckelplatte und einen Dichtungshalter gebildet ist,
wobei die Deckelplatte über eine Flüssigkeitseinlassöffnung und eine Flüssigkeitsauslassöffnung verfügt,
wobei der Dichtungshalter mittels einer Bördelverbindung mit dem Gehäuse verbunden ist, und der Dichtungshalter in Form einer Nut ausgebildet ist,
wobei eine Dichtung in der Nut angeordnet ist,
**dadurch gekennzeichnet, dass**
die Dichtung durch Einspritzen eines flüssigen Dichtungsmaterials in einen Hohlraum erzeugbar ist, wobei der Hohlraum durch ein, abdichtend auf dem Dichtungshalter platziertes Formoberteil gebildet ist, wobei das Formoberteil nach dem Aushärten des Dichtungsmaterials entnehmbar ist.

2. Wechselfilter nach Anspruch 1, **dadurch gekennzeichnet, dass** es sich bei dem Dichtungsmaterial um Flüssigsilikon handelt.

3. Wechselfilter nach Anspruch 1, **dadurch gekennzeichnet, dass** das Dichtungsmaterial ausgewählt ist aus der Gruppe bestehend aus Nitrilkautschuk (NBR), Acrylkautschuk (AEM, ACM) oder Fluorkautschuk (FKM).

4. Wechselfilter nach einem der Ansprüche 1 bis 3, **dadurch gekennzeichnet, dass** das Einspritzen mittels einer Dosiereinrichtung (12) durchführbar ist.

## Claims

1. Interchangeable filter having a cup-shaped housing and a cover, wherein the cover is formed by a cover plate and a seal holder, wherein the cover plate has a liquid inlet opening and a liquid outlet opening, wherein the seal holder is connected to the housing through the intermediary of a jointed-flange connection, and the seal holder is in the form of a groove, wherein a seal is disposed in the groove, **characterised in that** the seal is creatable by injecting a liquid sealing material into a hollow space, wherein the hollow space is formed by a mould upper part that is placed in a sealing manner on the seal holder, wherein the mould upper part is removable once the sealing material has hardened.

2. Interchangeable filter according to claim 1, **characterised in that** the sealing material is liquid silicon.

3. Interchangeable filter according to claim 1, **characterised in that** the sealing material is selected from the group comprising nitrile rubber (NBR), acrylate rubber (AEM, ACM) or fluorocarbon rubber (FKM).

4. Interchangeable filter according to one of claims 1 to 3, **characterised in that** the injecting can be carried out through the intermediary of a metering device (12).

## Revendications

1. Filtre interchangeable comprenant un boîtier en forme de pot et un couvercle, le couvercle étant composé d'une plaque de couvercle et d'un support de garniture d'étanchéité, la plaque de couvercle présentant une ouverture d'entrée de liquide et une ouverture de sortie de liquide, le support de garniture d'étanchéité relié au boîtier par sertissage présentant la forme d'une rainure, avec une garniture d'étanchéité disposée dans la rainure,
**caractérisé en ce que**
la garniture d'étanchéité est fabriquée par injection d'un matériau d'étanchéité liquide dans un espace creux, l'espace creux étant formé par une partie supérieure de moule placée de façon étanche sur le support de garniture d'étanchéité, la partie supérieure de moule pouvant être retirée après le durcissement du matériau d'étanchéité.

2. Filtre interchangeable selon la revendication 1,
**caractérisé en ce que**
le matériau d'étanchéité est du silicone liquide.

3. Filtre interchangeable selon la revendication 1,
**caractérisé en ce que**
le matériau d'étanchéité est choisi dans le groupe comprenant du caoutchouc nitrile (NBR), du caoutchouc acrylique (AEM, ACM) ou du caoutchouc fluoré (FKM).

4. Filtre interchangeable selon l'une quelconque des revendications 1 à 3,
**caractérisé en ce que**
l'injection est réalisable au moyen d'un dispositif de dosage (12).
